# EUROPEAN PATENT APPLICATION

(11) **EP 2 955 128 A1**
(43) Date of publication of application: **16.12.2015**
(21) Application number: 14172033.4
(22) Date of filing: 11.06.2014
(51) Int. Cl.: B65D 77/00, B32B 1/02, B65D 81/20

(54) **Dual ovenable packages for perishable food products**

(71) Applicant: Cryovac, Inc., Duncan, SC 29334-0464 (US)
(72) Inventor: Giusti, Barbara, I-20865 USMATE (MI) (IT); Vigano', Valeria, I-21020 BUGUGGIATE (VA) (IT)
(74) Representative: Fraire, Cristina

(57) **Abstract**

MAP dual ovenable polyester based packages for perishable food products, particularly fish, advantageous for the prolonged shelf life and direct cooking in mw or conventional oven, packaging processes for their manufacture and cooking methods are disclosed.

## Description

### Technical Field

The present invention relates to dual ovenable packages for perishable food products, particularly fish, to packaging processes for their manufacture and to cooking methods.

### Background Art

Storage of perishable fresh food products, such as meat, poultry, vegetables and, in particular, fish, is quite problematic due to the rapid deterioration of their organoleptic properties mainly caused by the action of oxygen and bacteria.

Fresh fish filets, packaged in polystyrene foam trays overwrapped with PVC films under air, a widespread type of package for fresh fish, generally do not exceed a shelf-life of about 6 days if stored in a refrigerator.

In order to prolong the shelf-life, perishable food products are thus refrigerated, frozen, vacuumized or kept under modified atmosphere and/or dried, and stored within expressly designed packages. Airtight packages for perishable food products, in particular fresh fish, with a modified internal atmosphere are well known in this field.

In such application, films and trays typically comprise high barrier materials and are tightly sealed to avoid gas exchanges with the environment and preserve the internal gas admixture. Trays, when do not comprise high barrier resins, exert a gas barrier effect thanks to their high thickness.

For instance, patent application ES2308946 describes a packaging system for storage of perishable products such as fresh fish. These packages consist in airtight and rigid containers lidded with thin shrinkable barrier films and include a protective atmosphere that keeps the products in the best conditions of freshness and microbiological growth. The protective atmosphere is obtained by flushing the interior of the package with a gas admixture of from 40% to 70% of CO₂, from 0% to 50% (30 to 90% for shellfish) of O₂ and from 20% to 60% of N₂.

ES2308947 relates to a packaging system for storage of live mollusks in a protective atmosphere - composed from about 50 to 90% of oxygen - comprising a container with multilayer structures, with a lower rigid layer of polypropylene or polyester, an intermediate protective, flexible permeable film, and a thin, resistant lidding shrink film with barrier properties, sealed to the container

EP0294165A2 relates to a fresh fish package excellent in preservation properties, wherein fresh fish is kept in a container closed with a lid, under an atmosphere of nitrogen or a mixture of nitrogen and carbon dioxide. The container and the lid are made from a resin having high gas barrier properties, such as high acrylonitrile content resins, polyvinyl alcohol resin and polyvinylidene chloride resin. The above references show that it is well known that a modified atmosphere is useful for prolonging shelf-life of perishable food products. Further, it is well established that the packaging must be airtight and the plastic materials used therein generally include high barrier resins.

In the packaging of foods, modified atmosphere packages MAP (s) is a term applied to a range of food packaging technologies that rely on mixtures of the atmospheric gases, such as oxygen, carbon dioxide and nitrogen, in amounts different from those normally found in air, in order to retard deterioration in foods.

All the previously mentioned packages are specifically designed for prolonging the shelf-life of fresh food, typically stored in a refrigerator at about 4°C, and are not intended for cook-in applications. Cook-in applications - namely cooking food products directly in the package - are becoming increasingly popular since they reduce the time spent in preparing meals, are efficient, do not require cooking skill, and allow portion control.

Additionally, if cooking is done in the intact package, cooking times are generally reduced, the oven remains clean, unpleasant smells are not released and flavor of the product is retained Cook-in method is particularly desirable in certain specific applications, such as for instance, for fresh fish products since it avoids handling raw fish and it reduces the risk of contamination.

Ovenable packages disclosed in prior art documents (for instance in ES2341530, or ES2308947 or WO9948770) or available in the market, typically include a thick, foamed or solid, plastic container closed with a lidding film sealed around the flange of the container (ovenable tray lidded packages) Further, ovenable packages comprising flexible containers completely enclosing the food product, as disclosed for instance in EP880899 A1 or EP2517961 are also known.

In cook-in packages, the food product is packed non-cooked or just precooked and then shipped to the wholesaler, retailer or consumer to be cooked.

The final cooking step can be done in a microwave or in a conventional oven, on the intact, pierced or open package.

A package suitable for both cooking methods is generally referred to as "dual-ovenable."

In case of traditional ovens, particularly high temperatures of about 200°C and more may be applied, thus limiting the choice of suitable packaging materials to those with very good thermal resistance.

Packaging materials should also provide a secure enclosure for the food both during storage, transportation, and during subsequent heating or cooking. The resulting seal needs to be strong enough to prevent leakage of the contents during storage and transportation but not so strong as to result in difficulties in removing the lid when the container is to be opened (peelability).

It is also important that the package provides the cooked-in food with a sufficiently high core temperature throughout the cooking to kill pathogens and bacteria, and taste, texture and appearance of the food products cooked in traditional ovens.

The packaging material should keep its clarity and not deteriorate, whiten or become opaque as result of the high temperatures experienced during the cooking cycle.

Safety issues are also critical as ovenable packaging can only be made of materials approved by Regulatory authorities for use in contact with a consumable product throughout the processing cycle, including any pre-cooking, packaging, heat-sealing, storage and cooking steps.

There are very few plastic materials suitable for this very demanding dual ovenable cook-in applications.

Materials which in practice, have been most developed and used for manufacturing dual ovenable packages, are substantially based on polyesters, in particular on semi-aromatic polyesters such as polyethylene terephthalates (PETs).

However, PETs are not materials of choice for MAP applications, in view of their inferior gas barrier properties with respect to known high barrier resins such as EVOH, PVDC etc etc Typically ovenable MAP packages are either only microwavable or, if dual ovenable, they include high barrier resins.

For instance, patent application ES2341530 describes microwaveable tray lidded packages for fresh fish comprising from 40% to 70% of CO₂, from 0% to 90% of O₂ and from 20% to 60% of N₂ placed between an intermediate protecting layer and the lid layer. Possible microwaveable packaging materials for the lid and the intermediate protecting film are ionomers, polyethylene, polybutene, polypropylene, adhesives and, for the container, high barrier resins such as EVOH. Polyesters are not mentioned.

EP880899A1 relates to packages, preferably bags, under modified atmosphere - in which the sum of O₂ and CO₂, amounts to 50% to 90% of the total gas content - for fresh shellfish or crustaceans, comprising a closed, gas-tight and liquid-tight container. These packages preserve the freshness of the products and prevent leak-out of the internal fluids. For the final consumption, the consumer generally removes the shellfish from the container, before washing and cooking. The package can be possibly heated in a microwave oven. The document does not provide any specific example of plastic materials suitable for this application.

NL1013691 shows a microwaveable container for packing food, in particular live shellfish in conjunction with vegetables and/or herbs and one or more sauces, under modified atmosphere, which counteracts deterioration. This atmosphere comprises more than 50 per cent oxygen and less than approximately 50 per cent carbon dioxide. These packages are not intended for cook-in applications in conventional oven. Polyesters are not mentioned.

WO9003737 discloses a method of cooking crustaceans in a plastic bag under modified atmosphere. Neither details on the bag composition nor information on the shelf-life of the fresh product packaged in that bag before cooking are provided.

WO99448770 mentions the use of polyester materials in MAP dual ovenable tray lidded packages, packages in which a foamed polyester thermoformed tray is lidded with an oriented PET film, under modified atmosphere.

There is still the need for a dual ovenable package, with a reduced use of plastic packaging material" for storage and cooking of fresh perishable food products, with an increased shelf-life and, after cooking the food product in the intact package under microwave and/or conventional ovens, providing the cooked product with improved taste and texture.

### Summary of the Invention

The Applicant has carried out studies using PET based dual ovenable films in packages with modified atmosphere for storage and cooking of fresh perishable products packaged therein.

The Applicant found out that sealed packages, in which said dual ovenable polyester based films, completely enclose the products under a modified atmosphere - provide for an unexpected improvement in the shelf life of perishable fresh food products packaged therein, without needing high barrier resins.

This result is quite surprising in view of the lower gas barrier performance of the conventional dual ovenable polyester based films with respect to high barrier films - and which are thus expected to be unsuitable for modified atmosphere packaging applications as they are less able to keep the internal atmosphere unchanged for long.

As disclosed in the experimental part of the present application, the Applicant measured the gas composition inside these packages overtime - in the absence of the product -and found out that it is altered quite rapidly. These findings do not encourage the use of these films in modified atmosphere applications.

Furthermore, the Applicant has also discovered that cooking fresh food product within these packages, results in an unexpected optimal cooking in terms of taste, texture and appearance.

A first object of the present invention is thus a modified atmosphere sealed dual ovenable package for storage and dual oven of fresh perishable food products comprising
A) at least a dual ovenable film, substantially made of polyester(s),
B) at least a fresh perishable food product and
C) a modified atmosphere, wherein
   said film completely and air-tightly encloses the product and the modified atmosphere in a flexible container.

A second object of the present invention is a process for manufacturing a package according to the first object of the present invention, comprising
- providing at least a dual ovenable film, substantially made of polyester(s)
- providing at least a fresh perishable food product,
- providing a MA,
- enclosing said product and said modified atmosphere ein a sealed air-tight flexible container obtainable by self-sealing said film.

A third object of the present invention is a method for cooking a fresh perishable food product comprising
- providing a package according to the first object of the present invention,
- inserting the intact package into a microwave or conventional oven, and
- cooking the product into the intact package for the time required.

### Brief description of the drawings

Fig. 1 is a graph representing the overtime variation of percentage by volume of oxygen content in comparative packages and a package according to the present invention but not containing the fresh food product (x-axis: days; y-axis: increment / decrement of oxygen, % by volume)
Fig. 2 is a graph representing the overtime, absolute percentage by volume of oxygen in comparative packages and a package according to the present invention but not containing the fresh food product (x-axis: days; y-axis: amount of oxygen, % by volume).
Fig. 3 is a graph representing the overtime variation of percentage by volume of carbon dioxide content in comparative packages and a package according to the present invention but not containing the fresh food product. (x-axis: days; y-axis: increment / decrement of carbon dioxide, % by volume)
Fig. 4 is a graph representing the overtime, absolute percentage by volume of carbon dioxide in comparative packages and a package according to the present invention but not containing the fresh food product (x-axis: days; y-axis: amount of carbon dioxide, % by volume).
Fig. 5A-5C are a schematic representation of a section of a package according to the first embodiment 10, wherein the flexible packahe is not shrunk.
Fig. 6A-6C are a schematic representation of a section of a package according to the second embodiment 20. In this embodiment, the top is indicated with 14 and the bottom with 15.

For the sake of conciseness, the same elements are numbered in different embodiments with the same reference number, in particular:
the packaged product is indicated with 11
the flexible container with 12
the support with 13, while modified atmosphere is not represented.

### Definitions

With the term "dual ovenable package" a package suitable for both microwave and conventional oven cooking is meant

With the term "perishable food product" a product likely to spoil, decay or become unsafe to consume if not kept refrigerated at about 4 °C or below or frozen at -18 °C or below is meant.. Examples of perishable foods that must be kept refrigerated for safety include meat, poultry, fish, shellfish, vegetables, dairy products, pasta and fresh bakery (ready to be cooked cakes admixtures, etc). With the term "fresh" perishable food product, a non cooked, non precooked, non frozen perishable food product is meant.

With the term "modified atmosphere" (MA), a gas composition suitable for food packaging applications different from natural air composition is meant. In particular, modified atmosphere means gas mixtures including a quantity of one or more of N2, 02 and C02 which is different from the quantity of these same gases as present in the atmosphere at 20°C and sea level (1 atmosphere pressure).

With the term "modified atmosphere packaging" (MAP), food packaging technologies that rely on particular mixtures of gases are meant.

With the term "film substantially made of polyester(s)" a film comprising at least 70% by weight of one or more (co)polyesters. The complement to 100% does not include high barrier resins in amount higher than 5%, preferably does not include any high barrier resin.

With the term "high barrier resin" a resin selected among semiaromatic polyamides, EVOH, high acrylonitrile content resins, polyvinyl alcohol resin and polyvinylidene chloride resins are ment.

With the sentence "a film completely and air-tightly encloses the product and the MA", it is meant that the film by sealing onto itself provides for an airtight flexible containers, which encloses the product and the MA.

With the term "flexible containers", containers obtainable by self- sealing a single piece of film in the form of an envelope, a bag or a pouch, or two separated pieces of films, named top and bottom, the same or different, are meant.

With the term "ovenable tray lidded packages", ovenable packages including a thick, foamed or solid, plastic container closed with a lidding film sealed around the flange of the container are meant. Unless otherwise stated, all the percentages are meant to be percentages by weight.

### Detailed description of the invention

A first object of the present invention is a modified atmosphere sealed dual ovenable package for storage and dual oven cooking of fresh perishable food products comprising
A) at least a dual ovenable film, substantially made of polyester(s),
B) at least a fresh perishable food product and
C) a modified atmosphere, wherein
   said film completely and air-tightly encloses the product and the modified atmosphere in a flexible container.

The package object of the present invention may include at least one of the following preferred features, taken alone or in combination with the other preferred features.

The dual ovenable film (A) is substantially made of (co)polyester(s), namely comprises at least 70%, preferably at least 80%, more preferably at least 90%, at least 95% by weight, on the total weight of the film, of one or more (co)polyesters.

In a preferred embodiment, film A consists of one or more (co)polyester(s).

The term "(co)polyester" is used herein to refer to both homo-and co- polyesters, wherein homopolyesters are defined as polymers obtained from the condensation of one dicarboxylic acid with one diol and co- polyesters are defined as polymers obtained from the condensation of one or more dicarboxylic acids with one or more diols. Suitable polyester resins are, for instance, polyesters of ethylene glycol and terephthalic acid, i.e. poly(ethylene terephthalate) (PET). Preference is given to polyesters which contain ethylene units and include, based on the dicarboxylate units, at least 90 mol %, more preferably at least 95 mol %, of terephthalate units. The remaining monomer units are selected from other dicarboxylic acids or diols. Suitable other aromatic dicarboxylic acids are preferably isophthalic acid, phthalic acid, 2,5-, 2,6- or 2,7-naphthalenedicarboxylic acid. Of the cycloaliphatic dicarboxylic acids, mention should be made of cyclohexanedicarboxylic acids (in particular cyclohexane-1,4-dicarboxylic acid). Of the aliphatic dicarboxylic acids, the (C3-Ci9)alkanedioic acids are particularly suitable, in particular succinic acid, sebacic acid, adipic acid, azelaic acid, suberic acid or pimelic acid. [0012] Suitable diols are, for example aliphatic diols such as ethylene glycol, diethylene glycol, triethylene glycol, propylene glycol, 1 ,3-butane diol, 1 ,4- butane diol, 1 ,5-pentane diol, 2,2-dimethyl-1 ,3-propane diol, neopentyl glycol and 1 ,6-hexane diol, and cycloaliphatic diols such as 1 ,4- cyclohexanedimethanol and 1 ,4-cyclohexane diol, optionally heteroatom- containing diols having one or more rings.

Co-polyester resins derived from one or more dicarboxylic acid(s) or their lower alkyl (up to 14 carbon atoms) diesters with one or more glycol(s), particularly an aliphatic or cycloaliphatic glycol may also be used. Suitable dicarboxylic acids include aromatic dicarboxylic acids such as terephthalic acid, isophthalic acid, phthalic acid, or 2,5-, 2,6- or 2,7-naphthalenedicarboxylic acid, and aliphatic dicarboxylic acids such as succinic acid, sebacic acid, adipic acid, azelaic acid, suberic acid or pimelic acid. Suitable glycol(s) include aliphatic diols such as ethylene glycol, diethylene glycol, triethylene glycol, propylene glycol, 1 ,3-butane diol, 1 ,4-butane diol, 1 ,5-pentane diol, 2,2- dimethyl-1 ,3-propane diol, neopentyl glycol and 1 ,6-hexane diol, and cycloaliphatic diols such as 1 ,4-cyclohexanedimethanol and 1 ,4- cyclohexane diol. Examples of such copolyesters are (i) copolyesters of azelaic acid and terephthalic acid with an aliphatic glycol, preferably ethylene glycol; (ii) copolyesters of adipic acid and terephthalic acid with an aliphatic glycol, preferably ethylene glycol; and (iii) copolyesters of sebacic acid and terephthalic acid with an aliphatic glycol, preferably butylene glycol; (iv) co-polyesters of ethylene glycol, terephthalic acid and isophthalic acid. Suitable amorphous co-polyesters are those derived from an aliphatic diol and a cycloaliphatic diol with one or more, dicarboxylic acid(s), preferably an aromatic dicarboxylic acid. Typical amorphous copolyesters include co-polyesters of terephthalic acid with an aliphatic diol and a cycloaliphatic diol, especially ethylene glycol and 1 ,4- cyclohexanedimethanol. The preferred molar ratios of the cycloaliphatic diol to the aliphatic diol are in the range from 10:90 to 60:40, preferably in the range from 20:80 to 40:60, and more preferably from 30:70 to 35:65.

Particularly preferred (co) polyesters are EASTAR PETG 6763, GN001 (Density 1.27 g/cm3, Glass Transition 81 °C, Viscosity Solution 0.75 mPa.sec) and EASTAPAK COPOLYESTER 9921 (Density 1.4000 g/cm3, Melting Point 255.0°C) by Eastman Chemical, RAMAPET N180 by Indorama.

(Co)polyester(s) suitable for the films of the package of the present invention are dual-ovenable (co)polyester(s), namely are suitable to stand the conditions applied for heating and cooking fresh food under microwave and/or traditional oven.

In the composition of the dual ovenable film A, the complement to 100% by weight does not include high barrier resins in amount higher than 5%, preferably not higher than 2%, more preferably not higher than 1%, even more preferably it does not include any high barrier resin.

High barrier resins are selected among semiaromatic polyamides, EVOH, high acrylonitrile content resins, polyvinyl alcohol resin and polyvinylidene chloride resins.

In the composition of the dual ovenable film A, the complement to 100% may include other resins in minor amount such as heat sealable resins or tie resins

The film may be a monolayer or a multilayer film, preferably the film is a multilayer film.

In case of a multilayer film, preferably a heat sealable layer is present.

The heat-sealable layer preferably comprises at least a first amorphous polyester resin, at least a thermoplastic resin and at least a further polyester resin. Said further polyester resin is different from the first amorphous polyester.

Suitable amorphous polyester resins are those deriving from an aliphatic diol and a cycloaliphatic diol with one or more dicarboxylic acids, preferably an aromatic dicarboxylic acid. Preferred amorphous polyesters are co-polyesters of terephthalic acid with an aliphatic diol and a cycloaliphatic diol, particularly ethylene glycol and 1,4-dicyclohexanedimethanol. The preferred molar ratios of the cycloaliphatic diol to the aliphatic diol are in the range from 10:90 to 60:40, preferably in the range from 20:80 to 40:60, more preferably from 30:70 to 35:65. A specific example of particularly preferred amorphous polyester is PETG Eastar<(R)> 6763, sold by Eastman, which comprises a co-polyester of terephthalic acid, about 33 mole % 1,4-cyclohexanedimethanol and about 67 mole % ethylene glycol.

Suitable further polyesters are those deriving from an aliphatic diol, preferably ethylene glycol, and an aromatic dicarboxylic acid, preferably terephthalic acid. Polyethylene terephthalate (PET) is preferred and amorphous PET is particularly preferred. A specific example of PET is Eastapak Copolyester 9921, sold by Eastman.

Suitable thermoplastic resins are polyamides, polystyrenes, in particular styrene-butadiene block copolymers, ionomers, ethylene/unsaturated carboxylic acid copolymers, such as ethylene/(meth)acrylic acid copolymers, ethylene/unsaturated esters copolymers, such as ethylene/vinyl acetate copolymers, ethylene/propylene copolymers and ethylene/cyclic olefin copolymers, such as ethylene/norbornene copolymers. Ethylene/(meth)acrylic acid copolymers are preferred. A specific example of particularly preferred thermoplastic resin is Primacor 3440, sold by Dow, which is an ethylene/acrylic acid copolymer with a co-monomer content acrylic acid 9.7%.

The amount of the first amorphous polyester in the heat-sealable layer of the multilayer film according to the present invention is generally from 25% to 70% by weight with respect to the total weight of the heat-sealable layer, preferably from 40 to 60% by weight. Specific preferred amounts are about 40%, and about 60% by weight.

The amount of the further polyester in the heat-sealable layer of the multilayer film for use in the package of the present invention is generally from 20% to 60% by weight with respect to the total weight of the heat-sealable layer, preferably from 25 to 50%. Specific preferred amounts are about 25%, about 45%, and about 60% by weight.

The amount of thermoplastic resin in the heat-sealable layer of the multilayer film for use in the package of present invention is generally from 10% to 20% by weight with respect to the total weight of the heat-sealable layer, preferably about 15% by weight.

In a particularly preferred embodiment, the heat sealable layer of the multilayer film for use in the package of the present invention comprises from about 40 to 60% by weight of the first amorphous polyester, from 25 to 50% by weight of the further polyester and from 10 to 20 % by weight of the thermoplastic resin

Specific examples of the blends of at least an amorphous polyester, at least a thermoplastic resin and at least a further polyester in the heat-sealable layer of the multilayer film for use in the package of the present invention are:
first amorphous polyester - 60% w/w thermoplastic resin - 15% w/w further polyester - 25% w/w
first amorphous polyester - 40% w/w thermoplastic resin - 15% w/w further polyester - 45% w/w
first amorphous polyester -25% w/w thermoplastic resin - 15% w/w further polyester - 60% w/w

In a preferred embodiment, the film for use in a package according to the present invention has a three-layer structure: a base layer, a heat-sealable layer and a polyester based outer layer on the opposite side of the base layer to the heat-sealable layer.

One or more of the layers of the film according to the present invention can optionally contain one or more additives conventionally used in the manufacture of polymeric films.

The films preferably used in the package according to the present invention are polyester-based multilayer films characterized by a good sealability and peelability, as well as resistance to heat treatment such as pasteurization or regeneration in microwave or conventional oven.

Preferably, the films used in the present invention are oriented films, more preferably biaxially oriented films.

The films used in the present invention may be heat shrinkable or not, preferably they are heat shrinkable. Preferably the films used in the present packages have a percentage of free shrink % at 120°C of at least 2%, 5%, 10,15% in longitudinal and/or transverse direction, measured according to ASTM D 2732.

These films may be conveniently printed.

The films used in the present package have a total thickness typically from 3 to 100 microns, from 5 to 80 microns, preferably from 10 to 70 microns, more preferably from 10 to 50 microns.

Using these very thin films as packaging materials for dual ovenable packages instead of the previous thick, lidded trays is very advantageous in terms of sustainability and costs. Surprisingly, notwithstanding the thinness of these films, shelf-life of the product is prolonged.

Exemplary films, usable in the present invention, and their manufacturing processes are described in EP2714390. Other possible films and their preparation are disclosed in WO2007/093495, WO2009/013284 and WO2013/080143.

Preferred dual ovenable films for use in the present invention are films comprising a base layer comprising a polyester having an intrinsic viscosity greater than 0.75 dl/g and a heat-sealable layer directly adhered to said base layer, said heat-sealable layer comprising an amorphous polyester having a melting temperature not higher than the melting temperature of the polyester of the base layer and a thermoplastic resin, characterized in that the heat-sealable layer comprises a further polyester resin, as described in EP2714390

The multilayer film preferably used in the packages of the present invention can be prepared according to known process for the preparation of biaxially oriented films, in particular according to the processes described in WO 2007/093495.

The package according to the present invention includes at least a fresh perishable food product. Preferred fresh perishable food products are meat, poultry, fish, shellfish, vegetables, dairy products, pasta and bakery, more preferred fish, especially in the form of fillets, such as bream, sole, trout, snapper, anchovies, turbot and dogfish.

Optionally the present package may include sauces, flavors, etc etc in addition to the fresh food product.

The package according to the present invention includes a modified atmosphere.

The composition of the modified atmosphere included in the package may vary depending upon the nature of the fresh food product packaged therein.

If the product is meat, poultry, fish, cheese, or pasta the following gas mixtures may be preferably used (quantities are expressed in volume percentages at 20°C, 1 atm of pressure):
- Red meats, Poultry skinless: 02=70%, CO2=30%
- Poultry with skin on, Cheese, Pasta: CO2=50%, N2=50%
- Fresh fish from 20 to 50% of CO2, from 35 to 70% of N2 and from 1 to 15% of 02, more preferably from 30 to 40% of CO2, from 40 to 55% of N2 and from 5 to 10% of 02, most preferably composed of about 45% CO2, about 5% 02 and about 50% N2.

In the package according to the present invention, the film completely and air-tightly encloses the product and the modified atmosphere in a flexible container.

In a first embodiment, said flexible container is in the form of an envelope, a bag or a pouch, made of a single piece of film.

Preferably, the film making the flexible container is heat shrinkable.

In one preferred first embodiment, the flexible container is heat shrunk around the product, thus conferring a tight appearance to the package.

In a second embodiment, said flexible container comprises two separated pieces of films, named top and bottom, sealed together along a peripheral surface surrounding the product.

In this second embodiment, both the films of the top and of the bottom are dual ovenable films substantially made of polyester(s), as defined above.

In a package according to the second embodiment, top and bottom films are the same film.

In another package according to the second embodiment, top and bottom films are different films.

Preferably the top film of the flexible container is heat shrinkable.

The bottom film of the flexible container, may be flat or, preferably, may be hollowed.

Preferably, the bottom is thermoformed thus providing a cavity and a flat surface or a flange surrounding the cavity, onto which the top film is sealed, thus providing the airtight flexible container enclosing the product and the MA.

In such a case, the bottom film is preferably a thermoformable dual ovenable film, substantially made of polyester(s). The skilled in the art is able to properly select films substantially made of polyester(s) according to the previous definition, which are also thermoformable and thus suitable as material for manufacturing the present thermoformed bottom. For general definitions and knowledge on film thermoformability and relevant parameters, see for instance EP2517961A1.

The package according to the first or to the second embodiment may further comprise an ovenable support for a better presentation, improved cooking and handling of the package (e.g. a tray).

As an alternative, the food product, especially if stiff enough e.g whole fish, may be packaged directly into the flexible container without any support, thus reducing the total amount of packaging material used.

The support, if present, is placed underneath the product, preferably within the flexible container. The support may be flat or hollow, of any shape and of any ovenable material such as ovenable plastics, cardboards etc ... The support may have or not a flange all around.

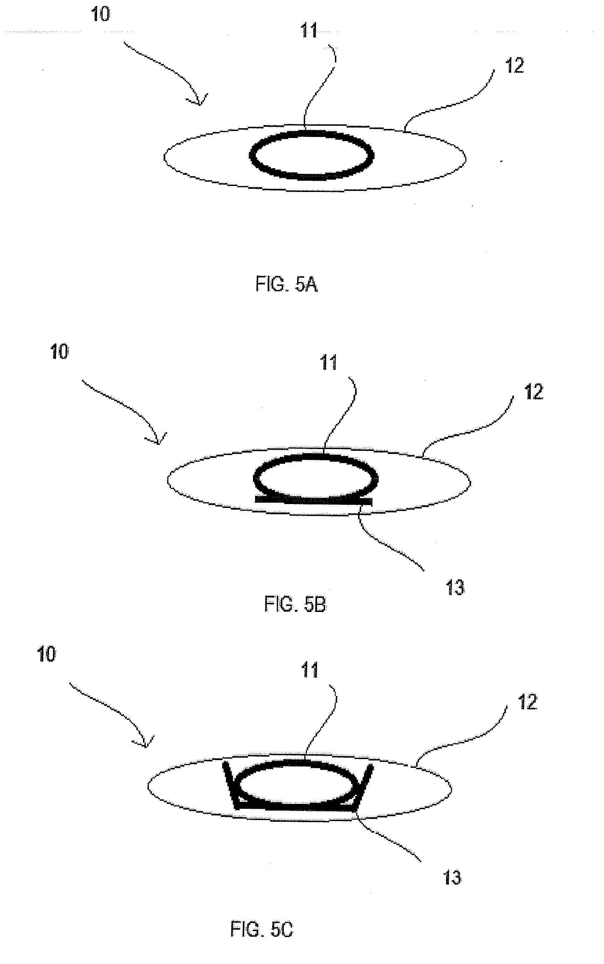

In a package according to the first embodiment 10, no support is present (FIG. 5A), in another package a flat support 13 is placed underneath the product (FIG5B), in a further package a hollow support without a flange 13 accommodates the product (FIG. 5C)

In a preferred package according to the second embodiment 20, the bottom 15 is thermoformed thus providing a cavity and a surrounding flange, the top 14 is sealed all around onto the flange. A support 13 may be present within the resulting flexible container 12.

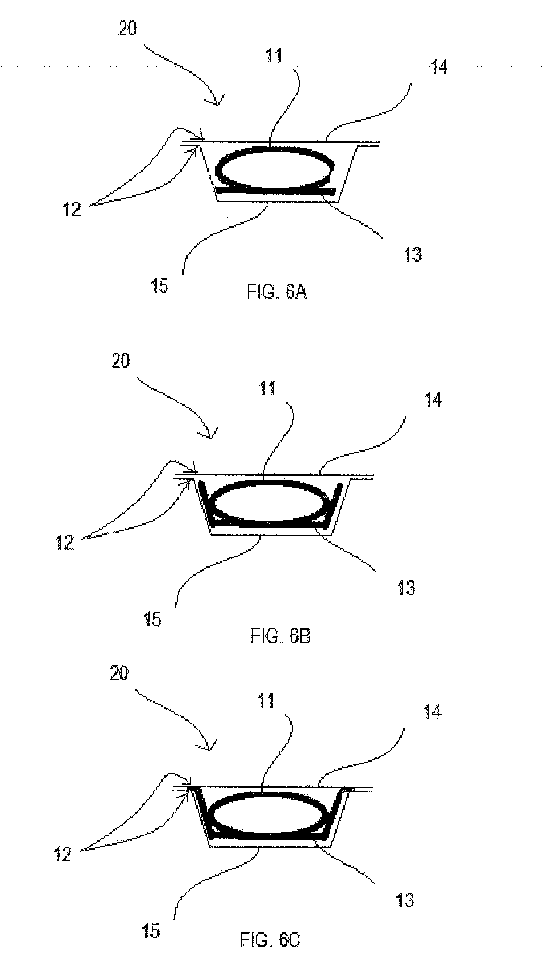

Said support 13, when present, may be of different shapes, in particular may preferably be:
- a flat support 13, preferably with the same shape and dimensions of the floor of the thermoformed cavity of the bottom 15 and placed underneath the product 11 in contact with said floor (Fig 6A) or
- a hollow support 13 without a flange, preferably following the shape and dimensions of the cavity of the thermoformed bottom 15, being place into the thermoformed cavity, in contact with the floor and the lateral walls (FIG. 6B), or
- a hollow support 13 with a flange (e.g. a tray), preferably following the shape and size of the cavity of the thermoformed bottom 15, but preferably with a narrower flange so as to leave at least a portion of the flange of the thermoformed bottom available for sealing of the top 14, when the support is placed into the thermoformed cavity, in contact with the floor, the lateral walls and the flange (FIG. 6C).

The thermoformed bottom may be pre-made or thermoformed in line, preferably it is thermoformed in line.

Optionally the package according to the second embodiment, when the product is placed into a flanged support, i.e. a tray, may comprise a further perforated lid film, sealed onto the flange of said support. The support, the product and the perforated lid are completely enclosed within the airtight flexible container.

Examples of suitable perforated films can be found in EP1353860 and EP1644266.

A second object of the present invention is a process for manufacturing a package according to the first object of the present invention, comprising
- providing at least a dual ovenable film, substantially made of polyester(s)
- providing at least a fresh perishable food product,
- providing a MA,
- enclosing said product and said modified atmosphere in a sealed air-tight flexible container obtainable by self-sealing said film.

The dual ovenable film may be formed from a single web that is folded over and longitudinally sealed. In a first embodiment, the process for manufacturing the package of the present invention according to the first embodiment, in which the flexible container is in a form of an envelope or a pouch, may be carried out according to HFFS (horizontal form fill seal) process - also called flowpack - or VFFS (vertical form fill seal) process.

Preferably, the package according to the first embodiment is manufactured through a flowpack MAP process.

A preferred process for the manufacture of a package of the present invention according to the first embodiment is a flowpack packaging process on a horizontal form-fill-seal machine HFFS which comprises:
(a) providing a dual ovenable flat film, substantially made of polyester(s)
(b) running the flat film through a former thus forming a tube
(c) inserting a fresh perishable food product, optionally placed on/into a support, into the tube,
(d) sealing the tube longitudinally,
(e) sealing and cutting the tube transversally at the beginning and at the end of the package,
(f) gas-flushing the tube before closing it with the selected MA, and
(g) optionally heat shrinking the package.

In this packaging process, the fresh food product, optionally placed on/into the support, optionally in the presence of a pad, is wrapped into a dual ovenable polyester based film envelope made around the product, under the selected MA. To create the envelope, the flat film is first folded around a former, and then longitudinally sealed to form a tube.

The product, optionally supported by or placed into a support, is placed in such a tube where the leading edge has been closed and gas flushed with the selected gas mixture. The excess gas is typically removed by a gentle pressure on top of the package. The open end of the envelope is then sealed and the package separated from the tubing.

In case the film is heat shrinkable, the loose package is then passed into a shrink tunnel, typically a hot air one set at a temperature suitable for shrinking such as a temperature of 120-150°C, to get shrinkage of the film and thus a tight package.

Packaging machines that can suitable for the so-called flowpack process include Ilapak Delta 2000 and 3000 or Ulma Baltic, Artic or Pacific.

A FFS machine, either Horizontal or Vertical, typically includes:
- a former for forming a flat web of film into a tubular configuration,
- a longitudinal sealer to seal the overlapped longitudinal edges of the film in the tubular configuration,
- a conveyor for feeding the products into the tubular film one after the other in suitably spaced configuration, or a feeding tube, in case of a VFFS machine, and
- a transverse sealer, for sealing the tubular film in a cross-wise direction to separate the products into discrete packages.

The transverse sealer may be operated to simultaneously seal the bottom of the leading pouch and the front of the following pouch and sever the two seals as well as the leading package from the front sealed tubing.

Alternatively, in the HFFS process, the transverse seal may be operated to sever the leading package from the following tubular portion and sealing the front of said tubular portion thus creating the sealed bottom of the next leading pouch. In this way the leading pouch containing the product to be packaged has a longitudinal seal and only one transverse seal. It can then be vacuumized before a second transverse seal hermetically closes it

In the FFS processes, while the transverse seals are always fin seals, the longitudinal seal can be either a fin seal or a lap seal, i. e. a seal where the innermost layer of the film is sealed to the outermost layer of the same film.

The VFFS process is known to those of skilled in the art and it is described, for example, in US4589247.

The gas-flushing step of the tube before closing it with the selected modified atmosphere is carried out conventionally.

The controlled atmosphere arrangement may be configured to inject gas or gas mixtures including a quantity of one or more of N2, 02 and CO2 which is different from the quantity of these same gases as present in the atmosphere at 20°C and sea level (1 atmosphere pressure).

The gas mixtures flushed into the tube to generate the modified atmosphere may vary depending upon the nature of product. Preferably, in case of fresh fish, the modified atmosphere comprises from 20 to 50% of CO2, from 35 to 70% of N2 and from 1 to 15% of 02, preferably from 30 to 40% of CO2, from 40 to 55% of N2 and from 5 to 10% of 02, even more preferably is composed of about 45% CO2, about 5% 02 and about 50% N2.

Processes for manufacturing the package of the present invention according to the first embodiment, in which the flexible container is in a form of a bag, are conventional processes such as those described in WO99/00248

Processes for manufacturing the package of the present invention according to the second embodiment, in which the flexible container comprises two separated pieces of films, named top and bottom, sealed together along a peripheral surface surrounding the product, are conventional processes.

A process for the manufacture of a package of the present invention according to the second embodiment is a lidding packaging process, which comprises
(I) providing a first dual ovenable film, substantially made of polyester(s), as a bottom film
(II) loading said bottom film with the fresh perishable product to be packaged, said product optionally placed on/into a support,
(III) providing a second dual ovenable, optionally heat shrinkable film, substantially made of polyester(s), as a top film;
(IV) applying said top film onto the bottom film and the product, and gas-flushing the system with the selected MA;
(V) heat-sealing the top film to the bottom film all around the product, enclosing the modified atmosphere between the top and the bottom, and optionally cutting around the seal, thus providing a package
(V) optionally, simultaneously or subsequently heat shrinking the package.

The top and bottom films may be provided as continuous webs - and in such a case a cutting step is carried out, simultaneously o subsequently to the heat sealing step - or as an alternative as discrete pre-cut pieces (billets).

The top film is sealed onto the bottom by means of temperature and/or pressure using conventional techniques and equipment. The top film is placed onto the bottom such that the heat-sealable layer, if present, is in contact with the heat sealable surface of the bottom.

Sealing is generally carried out by means of a heated frame at temperatures for instance of from 140°C to 200°C C at a pressure from 2 bar to 10 bar. Sealing times are generally in the order of 0.3-2.0 seconds.

The heat generated by the sealing frame, regardless of the short sealing times, may promote the shrinkage of the films in both directions to give a taut hermetically sealed flexible container. Preferably, the bottom film is thermoformed - off-line or preferably, on-line - thus providing a cavity in which the product, optionally placed on/into a support, may be accommodated.

Preferably, the films are provided as continuous webs and the bottom is thermormed in-line.

Tray lidding machines commonly used for carrying the tray lidding process described above are for instance instance Multivac 400 and Multivac T550 by Multivac Sep. GmbH, Mondini E380, E390 or E590 or Trave by Mondini S.pA, Ross A20 or Ross S45 by Ross-Reiser, Meca-2002 or Meca-2003 by Mecaplastic, the tray lidding machines manufactured by Sealpac, Ulma Taurus and Ulma Scorpius supplied by Ulma Packaging, Ishida QX and the like machines.

Thermoforming of the bottom film may be performed according to conventional methods, which are known in the art.

Gas flushing is carried out conventionally, with controlled atmosphere arrangements configured to inject gas mixtures including a quantity of one or more of N2, 02 and CO2 which is different from the quantity of these same gases as present in the atmosphere at 20°C and sea level (1 atmosphere pressure). A control unit may also be configured to control the composition of the modified atmosphere generated inside the packaging assembly.. The gas mixtures flushed (injected into the packaging chamber) which generates the modified atmosphere, may vary depending upon the nature of product. In case of fresh fish, preferably the modified atmosphere comprises from 20 to 50% of CO2, from 35 to 70% of N2 and from 1 to 15% of 02, more preferably from 30 to 40% of CO2, from 40 to 55% of N2 and from 5 to 10% of 02, most preferably composed of about 45% CO2, about 5% 02 and about 50% N2.

### Examples

The present invention can be further understood by reference to the following examples that are merely illustrative and are not to be interpreted as a limitation to the scope of the present invention that is defined by the appended claims.

In the following examples the polymers indicated in Table 1 below were used.

The films used in the packages of the examples according to the invention and in the packages of comparative examples have been collected in the Table 1.

**Table 1**

| Tradename / Supplier | Chemical Nature | Acronym | Properties & Parameters |
|---|---|---|---|
| EASTAR PETG 6763 - Eastman Chemical | Polyethylene Terephthalate/Glycol | PETG1 | Density 1.27 g/cm³, Glass Transition 81°C, Melt Flow Rate (Cond. 200°C / 05.00 kg (G)) 2.8 g/10 min, Viscosity Solution 0.75 mPa.sec |
| SUKANO G dc S503 - Sukano | AntiBlock and Slip in Polyethylene Terephthalate/Glycol - Amorphous Silica and Ester Wax | PETG2 | Additives (Filter value SiO2) 10%, Additives (Wax) 6%, Bulk (Apparent) Density 1.2 g/cm³, Vicat Softening Point 82°C |
| BYNEL 4104 (2006) - DuPont | Maleic Anhydride-Modified Ethylene/Butene Copolymer | LLDPE-mod | Density 0.9200 g/cm³, Melt Flow Rate (Cond. 190°C / 02.16 kg (E)) 1.10 g/10 min, Melting point 125°C |
| RAMAPET N180, Indorama | Polyester, copolymer of terephthalic acid, isophthalic acid and mono-ethylene glycol | PET1 | Density 1.4 g/cm³, Intrinsic Viscosity 0.80 dl/g, Glass transition temperature 78°C, Melting point 245°C |
| DOWLEX 2045S - DOW | Polyethylene, Linear Low Density Ethylene/Octene Copolymer - Linear, Ziegler/Natta | LLDPE1 | Density 0.9200 g/cm³, Melt Flow Rate (Cond. 190°C / 02.16 kg (E)) 1.00 g/10 min, Melting Point 124.0°C, |
| AF5841LL-TOSAF | Fatty Acid Esters and Silica in Polyethylene, Linear Low Density | LLDPE2 | Additives (Antifog) 10%, Ash 1.6%, Density 0.92 g/cm³, Melt Flow Rate (Cond. 190°C / 02.16 kg (E)) 3.0 g/10 min, |
| Plexar PX3227X09 - LyondellBasell Industries | Maleic Anhydride-Modified Polyethylene, Linear Low Density Blend - Rubber-Modified | LLDPE3 | Density 0.9130 g/cm³, Melt Flow Rate (Cond. 190°C / 02.16 kg (E)) 1.70 g/10 min, Melting point 124.0°C |
| DOWLEX SC 2108G - DOW | Polyethylene, Medium Density Ethylene/Octene Copolymer - Linear, Ziegler/Natta | MDPE | Density 0.935 g/cm³, Melt Flow Rate (Cond. 190°C / 02.16 kg (E)) 2.6 g/10 min, Melting Point 128.0°C |
| SURLYN AM7927 - DuPont | Zinc Neutralized Ethylene Methacrylic Acid Copolymer + Polyamide | EMAA-Zn/PA | Comonomer Content 11 %, Density 0.9800 g/cm³, Melt Flow Rate (Cond. 190°C / 02.16 kg (E)) 11.50 g/10 min, Melting point 94°C, Vicat Softening Point 71 °C |
| ULTRAMID C33 01 - BASF | Polyamide - 6/66 - Poly(caprolactam/hexamethy lenediamine/adipic acid) | PA-6\66 | Density 1.130 g/cm³, Melting Point 196.0°C, Melting Point (010°C/min) 196°C, Moisture Content Max 0.1 % |
| GRILON CF6S - EMS-Grivory | Polyamide - 6/12 - Poly(capro/laury)lactam | PA-6\12 | Density 1.0500 g/cm³, Melt Flow Rate (Cond. 190°C / 02.16 kg (E)) 5.75 g/10 min, Melt Volume Index (Cond. 275°C / 05.00 kg / 10 min) 195 ml/10 min, Melting point 130°C, |
| SOARNOL AT4403 - Nippon Gohsei | Hydrolyzed Ethylene/Vinyl Acetate Copolymer - More than 40 mole % Ethylene | EVOH/EVAL | Comonomer Content 44%, Crystallization Point 144°C, Density 1.14 g/cm³, Melting Point 164°C |

The multilayer films listed in Table 2 were used to prepare the dual ovenable packages of the examples and comparative examples reported in Table 4.

**Table 2**

| Films | FILM 1 (polyesters based) | FILM 2 (polyesters based) | FILM 3 Comparative (barrier film, no polyester) |
|---|---|---|---|
| Total thickness | 33 µm | 17.5 µm | 25 µm |
| Layer 1 | 60% PETG1 | 60% PETG1 | 50% LLDPE1 |
| | 15% LLDPE-mod | 15% LLDPE-mod | 30% MDPE |
| | 25% PET2 | 25% PET2 | 20% LLDPE2 |
| | (2.5 µm) | (2.0 µm) | (6.8 µm) |
| Layer 2 | 60% PET2 | 60% PET2 | 100% LLDPE3 |
| | 40% PETG1 | 40% PETG1 | |
| | (24.0 µm) | (13.5 µm) | (2.3 µm) |
| Layer 3 | 98% PET2 | 98% PET2 | 20% EMAA-Zn/PA |
| | 2% PETG2 | 2% PETG2 | 80% PA-6\66 |
| | (6.5 µm) | (2.0 µm) | (2.3 µm) |
| Layer 4 | | | 5% PA-6\12 |
| | | | 95% EVOH/EVAL |
| | | | (2.2 µm) |
| Layer 5 | | | 20% EMAA-Zn/PA |
| | | | 80% PA-6\66 |
| | | | (2.3 µm) |
| Layer 6 | | | 100% LLDPE3 |
| | | | (2.3 µm) |
| Layer 7 | | | 50% LLDPE1 |
| | | | 30% MDPE |
| | | | 20% LLDPE2 |
| | | | (6.8 µm) |

The layers of Table 2 are reported in their order of extrusion, from the sealing layer indicated as layer 1 to the outermost layer (the latest listed, layer 3).

Films 1 and 2 were prepared by sequential tenter frame technology according to the following methodology and conditions.

The three layers are coextruded through a three-layer feedblock and then distributed through a flat die, typically having a multimanifold system.

The melt out of the die is quenched onto a chill roll; electrostatic pinning is used to favour the intimate contact between melt and chill roll. The so formed cast is then biaxially oriented.

The stretching is done sequentially, first in machine direction (MD) and then in transverse direction (TD), or simultaneously, preferably simultaneously, at ratios of at least 3:1 in both MD and TD, and at temperature from 90°C to 106°C, preferably from 95°C to 100°C (preheating zones) and from 88°C to 104°C, preferably from 92°C to 100°C (stretching zones). Before oven exit, the film is generally annealed at temperature from 160°C to 230°C, according to the shrink level required, finally cooled, edge trimmed and wound into mill logs.

Film 3 was manufactured with a tubular process, also known as "double bubble" process, in which simultaneous biaxial orientation is obtained by extruding a thermoplastic resin tube which is subsequently quenched, reheated and then expanded by internal gas pressure to induce transverse orientation, and wound at a rate which will induce longitudinal orientation. An example of an equipment suitable for this technique is disclosed in US 4,841,605.

In the following table 3 the operating conditions adopted for the manufacture of FILMS 1, 2 and 3 and a few characteristics are summarized:

**Table 3**

| | FILM 1 | FILM 2 | FILM 3 |
|---|---|---|---|
| Film thickness | 33µm | 17µm | 25µm |
| Cast sheet thickness | 528µm | 272µm | 210µm |
| Chill roll temperature: | 20°C | 20°C | 10°C |
| Cold batch roll speed (tape linear speed) | 14.0 m/min | 22.0 m/min | 20.0 m/min |
| Cross-linking level | -- | -- | 65 kGy |
| Orientation Preheating temperature | 96°C | 96°C | 120-115°C |
| Orientation Stretching temperature | 96°C | 96°C | -- |
| Annealing temperature | 210-210°C | 210-210°C | 75°C |
| Orientation ratio, Longitudinal | 4.0 : 1 | 4.0 : 1 | 3.0 : 1 |
| Orientation ratios, Transversal | 4.0 : 1 | 4.0 : 1 | 2.8 : 1 |
| Film cooling temperature | 25-30°C | 90.0 m/min | 25-30°C |
| Film winding speed | 60.0 m/min | 17µm | 62.0 m/min |

Several packages, not comprising any food product, were manufactured according to the invention with the above films 1 and 2, or as comparative packages (C examples). These void packages were studied in terms of variations of the internal MA.

A few complete packages - including the product- were manufactured according to the invention or as comparative examples and evaluated in terms of shelf-life, bacterial load, taste and appearance after cooking.

A few packages were collected in supermarkets.

In the following table 4 comparative and exemplarily packages according to the invention are shown:

**Table 4**

| Ex. | Gas composition | Type of package ST, TL,EN, TB, TBT | FILM | Additional items (tray, adsorbent pad, packaging equipment) | Product |
|---|---|---|---|---|---|
| C1§ | AIR | ST | PVC (25 µm) | PS foam tray (18 cm x 23 cm x 20 mm) | sea bream fish fillets |
| C2 | MAP | TL | FILM 3 | PS foam tray (BFT1523 by Vitembal, 15 cm x 23 cm x 30 mm), Mondini Evolution E380 | No * |
| C3 | MAP | TL | FILM 3 | PS foam tray (BFT1523 by Vitembal, 15 cm x 23 cm x 30 mm), humid pad (Pad Magic LLP17, 10 cm x 14 cm, soaked with 80 ml of water), Mondini Evolution E380 | No* |
| C4 | MAP | TL | FILM 2 | rigid C-PET tray (Faerch 12.7 cm x 15.7 cm x 50 mm; code 2155-1 E), Mondini Evolution | No* |
| C5 | MAP | TL | FILM 2 | rigid C-PET tray (Faerch 12.7 cm x 15.7 cm x 0.5 cm; code 2155-1 E), humid pad (Pad Magic LLP17, 10 cm x 14 cm, soaked with 80 ml of water), Mondini Evolution E380 | No* |
| Ex 1 | MAP | EN (Flowpack) | FILM 1 | No tray Ilapak Delta 3000 | No |
| Ex 2 | MAP | EN (Flowpack) | FILM 2 | No tray Ilapak Delta 3000 | No |
| Ex 3 | MAP | EN (Flowpack) | FILM 1 | foamed C-PET with A-PET liner, (13.5 cm x 25.0 cm x 3.0 cm, thickness 1,2 mm), Ilapak | No |
| Ex 4 | MAP | EN (Flowpack) | FILM 2 | foamed C-PET tray with A-PET liner, (13.5 cm x 25.0 cm x 30 mm cm, thickness 1,2 mm) | sea bream fish fillets |
| Ex 5 | MAP | TBT | FILM 2 as top FILM 1 as thermoformed bottom (13.0 cm x 23.0 cm x 1.0 cm) | foamed C-PET tray (thickness 1.2 mm, 13.0 cm x 23.0 cm x 0.5 cm) Multivac R272 | No |
| Ex 6 | MAP | TBT | FILM 2 as top FILM 1 as thermoformed bottom (14 cm X 17 cm x 1 cm) | no tray Multivac R272 | No * |

Keys: Ex packaging according to the invention, C comparative example; ST stretch wrapped TL tray lidded with a film; EN envelope (HFFS); TB top & bottom sealed films; TBT top and bottom sealed films, bottom thermoformed; AIR: 0.04% CO₂, 21% O₂, 78% N₂; MAP: 45% CO₂, 5% O₂, 50% N₂; PS polystyrene; C-PET crystalline polyethylene terephthalate; A-PET amorphous polyethylene terephthalate; § samples collected in supermarkets; * samples tested for gas evolution

The comparative packages C2 to C5 and the package according to the invention of Ex. 6 (10 samples for each measure) were stored in a refrigerator at 4°C, 80% RH. The composition of the internal modified atmospherewas measured overtime with a Gas Analyser DANSENSOR PBI Check Mate 9900, 9948770 This analyzers test the oxygen and carbon dioxide content within internal atmosphere of the sealed packages. The atmosphere is tested by piercing the lid with a syringe, which sends the internal gas to a detector

The analyzer has the following features:

**Table 5**

| Detected gas | Oxygen | Carbon Dioxide |
|---|---|---|
| Sensors | Ceramic | IR double wave lenght |
| Measurement range | 0.01 - 100% | 0.01 - 100% |
| Accuracy | Max ± 1% | Max ± 2% |
| Response time | 3 - 5s | 10s |

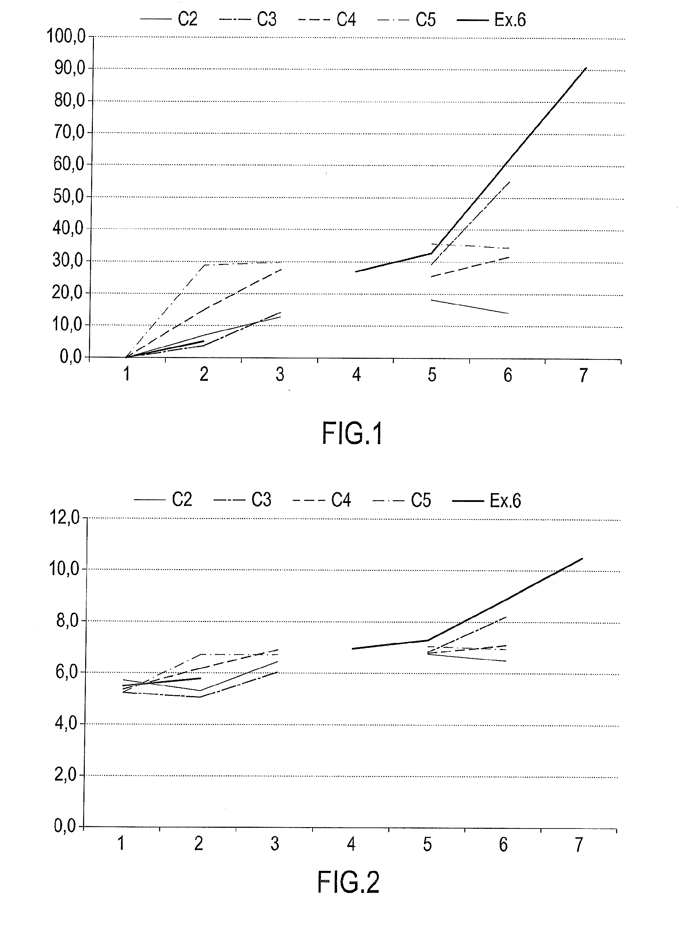

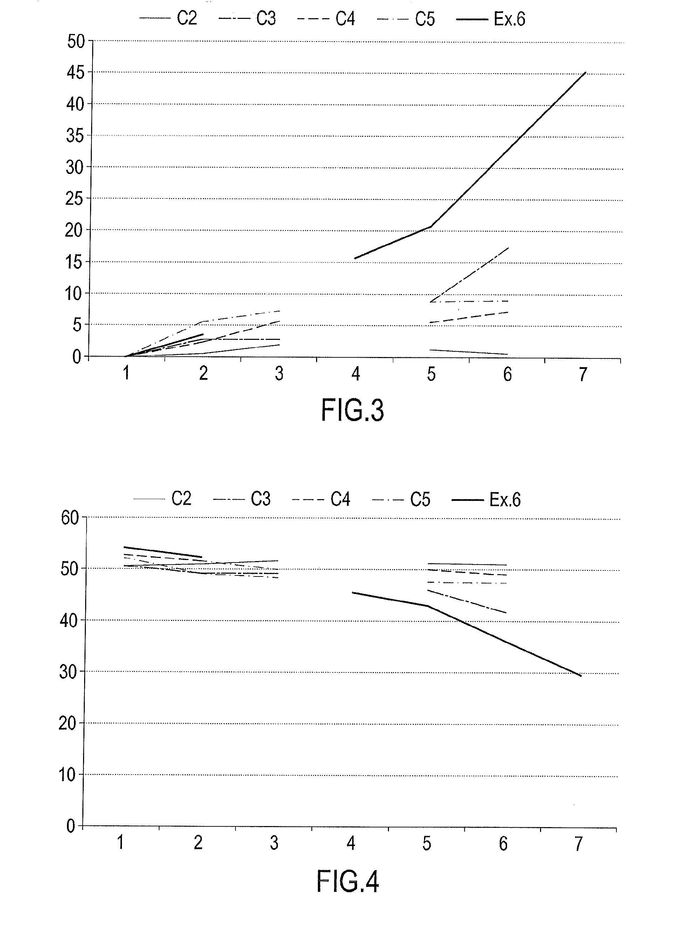

The values of oxygen and carbon dioxide measured in the samples up to day 11 are collected in Table 6 a and b (oxygen percentage variation, oxygen percentage) and 7 a and b (carbon dioxide percentage variation , carbon dioxide percentage). Figures 1 to 4 show the corresponding graphs.

**Table 6 a: oxygen percentage variation**

| Figure 1 | | | | | | | | |
|---|---|---|---|---|---|---|---|---|
| | | t=0 | 1 day | 2 days | 4 days | 5 days | 8 days | 11 days |
| Tray lidding | C2 | 0.0 | 7.0 | 12.8 | -- | 18.3 | 14.4 | -- |
| Tray lidding | C3 | 0.0 | 4.4 | 13.9 | -- | 29.3 | 55.1 | -- |
| Tray lidding | C4 | 0.0 | 14.9 | 27.6 | -- | 25.5 | 31.8 | -- |
| Tray lidding | C5 | 0.0 | 28.8 | 29.7 | -- | 35.5 | 34.3 | -- |
| Thermoformed film + lid | EX. 6 | 0.0 | 5.5 | -- | 27.3 | 32.7 | 61.8 | 90.9 |

**Table 6 b: oxygen percentage**

| Figure 2 | | | | | | | | |
|---|---|---|---|---|---|---|---|---|
| | | t=0 | 1 day | 2 days | 4 days | 5 days | 8 days | 11 days |
| Tray lidding | C2 | 5.7 | 5.3 | 6.4 | -- | 6.7 | 6.5 | -- |
| Tray lidding | C3 | 5.3 | 5.1 | 6.0 | -- | 6.9 | 8.2 | -- |
| Tray lidding | C4 | 5.4 | 6.2 | 6.9 | -- | 6.8 | 7.1 | -- |
| Tray lidding | C5 | 5.2 | 6.7 | 6.7 | -- | 7.0 | 7.0 | -- |
| Thermoformed film + lid | EX. 6 | 5.5 | 5.8 | -- | 7.0 | 7.3 | 8.9 | 10.5 |

**Table 7 a: carbon dioxide percentage variation**

| Figure 3 | | | | | | | | |
|---|---|---|---|---|---|---|---|---|
| | | t=0 | 1 day | 2 days | 4 days | 5 days | 8 days | 11 days |
| Tray lidding | C2 | 0 | 0.6 | 2.0 | -- | 1.2 | 0.6 | -- |
| Tray lidding | C3 | 0 | 3.0 | 2.8 | -- | 8.9 | 17.3 | -- |
| Tray lidding | C4 | 0 | 2.5 | 5.5 | -- | 5.5 | 7.2 | -- |
| Tray lidding | C5 | 0 | 5.6 | 7.1 | -- | 8.7 | 9.1 | -- |
| Thermoformed film + lid | EX. 6 | 0 | 3.5 | -- | 15.7 | 20.7 | 33.1 | 45.4 |

**Table 7 b: carbon dioxide percentage**

| Figure 4 | | | | | | | | |
|---|---|---|---|---|---|---|---|---|
| | | t=0 | 1 day | 2 days | 4 days | 5 days | 8 days | 11 days |
| Tray lidding | C2 | 50.4 | 50.7 | 51.4 | -- | 51 | 50.7 | -- |
| Tray lidding | C3 | 50.4 | 48.9 | 49 | -- | 45.9 | 41.7 | -- |
| Tray lidding | C4 | 52.6 | 51.3 | 49.7 | -- | 49.7 | 48.8 | -- |
| Tray lidding | C5 | 51.9 | 49 | 48.2 | -- | 47.4 | 47.2 | -- |
| Thermoformed film + lid | EX. 6 | 54 | 52.1 | -- | 45.5 | 42.8 | 36.1 | 29.5 |

### Gas evolution test

The data reported above show that the packaging according to the present invention (Ex 6) has worse performance in terms of gas barrier efficacy, both with respect to packages comprising high barrier resins (C2, C3) and to tray lidded packages comprising polyesters (C4, C5). This finding may be due to the worse gas barrier properties of the polyester based films and to their much lower thickness compared to the thickness of the trays.

Surprisingly, the dual ovenable packages according to the invention performs well in terms of shelf-life, as disclosed in the following table 8

The packages of Example 4 and Comparative 1 were tested for shelf-life. 10 samples each were stored in a refrigerator at 4°C and tested for bacterial load, color, odor and taste at pre-established days. The outcome of these observations and the features of the packages are summarized below:

**Table 8: shelf life**

| | | Packaging method | Packaging method |
|---|---|---|---|
| | | flowpack | flowpack |
| | | EXAMPLE 4 envelope | COMPARATIVE 1 Streched wrapping |
| | FILM | FILM 2 | PVC 25 micron |
| support | | Foam CPET tray with APET liner, 13 cm x 23 cm, 15 mm depth, thickness 1,2 mm | PS foam tray 18 X 23 cm |
| MAP | Yes / No | Yes | no |
| oxygen | % vol | 5 | air |
| carbon dioxide | % vol | 45 | air |
| nitrogen | % vol | 50 | air |
| shelf life | days | 7 | 6 |
| machine | type | Ilapack Delta 3000 | Unkown stretch wrapper |
| main set up | | sealing temperatures:160°C long-170°C trans | unknown |
| product | | sea bream fillets | sea bream fillets |

Microbiological results are summarized in the enclosed table. Results expressed as cfu/g. Raw material: fish used for the test at the beginning of the tests

**Table 9: bacterial load**

| Days | Package | Total mesophyles | E. Coli | Cliforms | Pseudomonas |
|---|---|---|---|---|---|
| 0 | Raw material | 6.28 | <1 | <1 | 6.04 |
| 5 | Comp. 1 | 7.24 | <1 | <1 | 6.52 |
| 5 | Ex. 4 | 6.45 | <1 | <1 | 5.5 |
| 7 | Comp.1 | 8 | <1 | <1 | 7.08 |
| 7 | Ex. 4 | 6.54 | <1 | <1 | 5.6 |

The data reported in Table 9, show that the present packages provide for an improved shelf-life and a reduced bacterial load.

The results of shelf-life studies on the present thermoformed packages (Ex. 6) with dual ovenbale polyester based films showed that the present solution - using very thin materials which are dual ovenable and do not include EVOH like barrier materials- has anyway a permeability able to bring benefits for the shelf life time of a fresh fish. MAP composition is retained, although slightly progressing during the shelf life,possibly evolving at an optimal environment in which the fish can be maintained fresh for longer.

### Cooking test

The package of Ex. 4 according to the invention was cooked into the intact package (envelope) in a conventional oven at 190°C for 20 minutes. The package was self-venting and, at the end, could be easily removed from the oven, as the edges of the envelope provided for an easy non- hot grip, and the envelope easily open (peelable). The fish presented a very good taste and appearance.

In conclusion, it's known how difficult is to keep fish fresh and also inconvenient touching, elaborating and cooking fresh fish. The possibility to have longer shelf life and dual ovenability in the same package, in the meantime using a significantly lower amount of plastics is of great value for end user and for the environment. In fact the present packages reduce the environmental impact due to the use of thin and recyclable films and of lighter or absent internal support, with benefits all along the whole supply chain.,

The present package allows a complete protection of the food, which remains untouched from the outside environment until when it's served on the table.

The transparent thin dual ovenable films used in these packages with a crispy touch, are more appealing as they deliver a reduced sense of plastic around the food product, appearing as a "wrap"(papillotte). They also allow a better visibility of the content.

Other advantages are linked to the flexibility of the manufacturing processes, especially of flowpack packaging.

It allows easy packaging of fresh fish, normally wet and difficult to handle at loading, and releasing drip, which might create problem of contamination in the sealing area and loss of hermeticity in case of tray lidding packaging.

The possibility to cook the food, especially fish, without touching it from producer to end user, and in the closed pack inside conventional oven, also allows to keep the oven clean, to reduce fish smell, and increase flavor retention, with an optimal food cooking with an outer surface crispy and internal tender meat. The combination of the particular materials used for packaging and of the modified atmosphere composition provides for a more uniform cooking. with less risk of parts overcooked and other parts raw. The pack acts like a small oven - inside the conventional or MW oven - keeping a uniform temperature, without needing pre-piercing the package and without spurting.

Another advantage is that, even if very thin, those materials allow easy handling of the closed pack after oven cooking when bringing the hot pack to the table. While a standard tray lidding solution (or a standard ovenable pan) is hot after oven cooking, the packages of the present inventions can be easily moved to the place where it is opened, in fact the (minor) excess of material at the sides of the pack acts like small handles.

Although the present invention has been described with reference to the preferred embodiments, it is to be understood that modifications and variations of the invention exist without departing from the principles and scope of the invention, as those skilled in the art will readily understand. Accordingly, such modifications are in accordance with the claims set forth below.

## Claims

1. A modified atmosphere sealed dual ovenable package for storage and cooking of fresh perishable food products comprising
A) at least a dual ovenable film, substantially made of polyester(s),
B) at least a fresh perishable food product and
C) a modified atmosphere, wherein
said film completely and air-tightly encloses the product and the modified atmosphere in a flexible container.

2. The package according to claim 1 wherein said flexible container is in the form of an envelope, a bag or a pouch, made of a single piece of film.

3. The package according to claim 1 wherein said flexible container comprises two separated pieces of films, named top and bottom, sealed together along a peripheral surface surrounding the product

4. The package according to anyone of claims 1 to 3 wherein the dual ovenable film comprises at least 70%, preferably at least 80%, more preferably at least 90%, at least 95% by weight, on the total weight of the film, of one or more (co)polyesters.

5. The package according to claim 4 wherein the complement to 100% by weight in the composition of the dual ovenable film does not include high barrier resins in amount higher than 5%, preferably not higher than 2%, more preferably not higher than 1%, even more preferably it does not include any high barrier resin.

6. The package according to anyone of claims 1 to 5 wherein the dual ovenable film is biaxially oriented and heat shrinkable.

7. The package according to anyone of claims 1 to 6 wherein the dual ovenable film has a total thickness from 3 to 100 microns, from 5 to 80 microns, preferably from 10 to 70 microns, more preferably from 10 to 50 microns.

8. The package according to anyone of claims 1 to 7 wherein said fresh perishable food product is fresh fish.

9. The package according to claim 8 wherein said modified atmosphere comprises from 20 to 50% of CO₂, from 35 to 70% of N₂ and from 1 to 15% of O₂, more preferably from 30 to 40% of CO₂, from 40 to 55% of N₂ and from 5 to 10% of O₂, most preferably composed of about 45% CO₂, about 5% O₂ and about 50% N₂.

10. The package according to claim 2 wherein said bottom is thermoformed, thus providing a cavity.

11. The package according to anyone of claims 1 to 10 further comprising a support.

12. A process for manufacturing a package according to anyone of claims 1 to 11, comprising
- providing at least a dual ovenable film, substantially made of polyester(s),
- providing at least a fresh perishable food product,
- providing a modified atmosphere,
- enclosing said product and said modified atmosphere in a sealed air-tight flexible container obtainable by self-sealing said film.

13. A flowpack packaging process for manufacturing the package of claim 2, on a horizontal form-fill-seal machine (HFFS), which comprises
(a) providing a dual ovenable flat film, substantially made of polyester(s)
(b) running the flat film through a former thus forming a tube
(c) inserting a fresh perishable food product, optionally placed on/into a support, into the tube,
(d) sealing the tube longitudinally,
(e) sealing and cutting the tube transversally at the beginning and at the end of the package,
(f) gas-flushing the tube before closing it with the selected modified atmosphere, and
(g) optionally heat shrinking the package.

14. A lidding packaging process for the manufacture of a package according to claim 3, which comprises
(I) providing a first dual ovenable film, substantially made of polyester(s), as bottom film,
(II) loading said bottom film with the fresh perishable product to be packaged, said product being optionally placed on/into a support,
(III) providing a second dual ovenable, optionally heat shrinkable film, substantially made of polyester(s), as top film;
(IV) applying said top film onto the bottom film and on the product, and gas-flushing the system with the selected modified atmosphere;
(V) heat-sealing the top film to the bottom film all around the product, enclosing the modified atmosphere between the top and the bottom, and optionally cutting around the seal, thus providing a package,
(V) optionally, simultaneously or subsequently heat shrinking the package.

15. The process according to anyone of claims 12 to 14 wherein said fresh perishable food product is fish and said modified atmosphere comprises from 20 to 50% of CO₂, from 35 to 70% of N₂ and from 1 to 15% of O₂, more preferably from 30 to 40% of CO₂, from 40 to 55% of N₂ and from 5 to 10% of O₂, most preferably composed of about 45% CO₂, about 5% O₂ and about 50% N₂.

16. A method for cooking a fresh perishable food product comprising
- providing a package according to anyone of claims 1 to 11,
- inserting the intact package into a microwave or conventional oven, and
- cooking the product into the intact package for the time required.
